(19) Europäisches Patentamt
European Patent Office
Office européen des brevets

(11) **EP 4 087 203 A1**

(12) **EUROPEAN PATENT APPLICATION**
published in accordance with Art. 153(4) EPC

(43) Date of publication:
**09.11.2022 Bulletin 2022/45**

(21) Application number: **20909213.9**

(22) Date of filing: **22.10.2020**

(51) International Patent Classification (IPC):
***H04L 25/49*** *(2006.01)*

(52) Cooperative Patent Classification (CPC):
**H04L 25/49**

(86) International application number:
**PCT/CN2020/122937**

(87) International publication number:
**WO 2021/135541 (08.07.2021 Gazette 2021/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.12.2019 CN 201911400195**

(71) Applicant: **ZTE Corporation**
**Shenzhen, Guangdong 518057 (CN)**

(72) Inventors:
• **CHEN, Songkun**
**Shenzhen, Guangdong 518057 (CN)**

• **ZHANG, Zheyuan**
**Shenzhen, Guangdong 518057 (CN)**
• **NING, Dongfang**
**Shenzhen, Guangdong 518057 (CN)**
• **DAI, Zhengjian**
**Shenzhen, Guangdong 518057 (CN)**
• **WU, Xiaofang**
**Shenzhen, Guangdong 518057 (CN)**

(74) Representative: **Petraz, Gilberto Luigi et al**
**GLP S.r.l.**
**Viale Europa Unita, 171**
**33100 Udine (IT)**

(54) **PRE-DISTORTION PROCESSING METHOD, DEVICE, APPARATUS, AND STORAGE MEDIUM**

(57) Provided are a pre-distortion processing method, a device, an apparatus, and a storage medium. The method comprises: determining a current envelope signal corresponding to a current radio frequency input signal; using an envelope correction parameter table to perform correction on the current envelope signal, and obtaining a corrected envelope signal; determining, on the basis of the current envelope signal, the current radio frequency input signal and a radio frequency digital pre-distortion (DPD) parameter table, a radio frequency input signal that has undergone DPD processing; and controlling the radio frequency input signal that has undergone DPD processing on the basis of the corrected envelope signal, and obtaining a current radio frequency output signal.

EP 4 087 203 A1

**Description**

The present application is based on and claims the priority to Chinese patent application No.201911400195.8, filed on December 30, 2019, the contents of which are incorporated herein by reference in its entirety.

FIELD

The present application relates to the field of wireless communication networks and digital signal processing, in particular to a pre-distortion processing method, a device, an apparatus, and a storage medium.

BACKGROUND

With the development of wireless communication technologies, the peak-average ratio (PAR) of a wirelessly transmitted signal is increasing due to the application of various high-order modulation methods. In order to solve the problem of the increasing PAR of a power amplifier (PA), an envelope tracking (ET) technology stands out for its high efficiency, reliability, easy implementation, etc. The core idea of the ET technology solution is to adjust the drain or source voltage of the PA according to an envelope signal of a radio frequency input signal, so that the drain or source voltage of the PA varies with the envelope signal of the radio frequency input signal, reducing the power loss of the PA when a low-power signal is input and thus improving the efficiency.

However, in existing ET technologies, the working state of an envelope link may be affected by a radio frequency link and a distortion may be occurred, and such distortion may accordingly cause a distortion of the output signal of the PA in the radio frequency link and reduce the linearity of the PA.

SUMMARY

The present application provides a pre-distortion processing method, a device, an apparatus, and a storage medium.

In a first aspect, an embodiment of the present application provides a pre-distortion processing method, including: determining a current envelope signal corresponding to a current radio frequency input signal; obtaining a corrected envelope signal by correcting the current envelope signal according to an envelope correction parameter table; determining, based on the current envelope signal, the current radio frequency input signal and a radio frequency digital pre-distortion (DPD) parameter table, a DPD-processed radio frequency input signal; and obtaining a current radio frequency output signal by controlling the DPD-processed radio frequency input signal based on the corrected envelope signal.

In a second aspect, an embodiment of the present application provides a pre-distortion processing device, including: an envelope signal determination module, an envelope correction module, a radio frequency DPD module and a radio frequency signal output module. The envelope signal determination module is configured to determine a current envelope signal corresponding to a current radio frequency input signal; the envelope signal correction module is configured to obtain a corrected envelope signal by correcting the current envelope signal according to an envelope correction parameter table; the radio frequency DPD module is configured to determine, based on current envelope signal, the current radio frequency input signal and a radio frequency digital pre-distortion (DPD) parameter table, a DPD-processed radio frequency input signal; the radio frequency signal output module is configured to obtain a current radio frequency output signal by controlling the DPD-processed radio frequency input signal based on the corrected envelope signal.

In a third aspect, an embodiment of the present application provides an apparatus, including: one or more processors; and a memory, configured to store one or more programs. The one or more programs are executed by the one or more processors, so that the method according to any one of the embodiments of the application is implemented by means of the one or more processors.

In a fourth aspect, an embodiment of the present application provides a storage medium. The storage medium stores a computer program, when the computer program is executed by the processors, the method according to any one of the embodiments of the application is implemented.

With regard to the above embodiments and other aspects of the present application, as well as implementations thereof, a further explanation is provided in the brief description of the drawings, the detailed description of the embodiments and the claims.

BRIEF DESCRIPTION OF THE DRAWINGS

Fig. 1 is a structural diagram illustrating an envelope tracking power amplifier (ET-PA) system in the existing art;

Figs. 2a and 2b are schematic diagrams illustrating two signal outputs caused by mutual coupling between a radio frequency input signal and an envelope signal of the existing ET-PA system

Fig. 3 is a flow chart of a pre-distortion processing method provided by an embodiment of the present application;

Fig. 4 is a schematic structural diagram illustrating a pre-distortion processing device provided by an embodiment of the present application;

Fig. 5 is a schematic structural diagram illustrating an ET-PA system with both high efficiency and high linearity provided by an embodiment of the present application;

Figs. 6a, 6b and 6c are schematic diagrams illustrating two output signals with the coupling effect of the radio frequency input signal and the envelope signal being removed provided by an embodiment of the present application;

Fig. 7 is a Diagram illustrating a work flow of an ET-PA system with both high efficiency and high linearity provided by an embodiment of the present application;

Fig. 8 is an internal structure diagram illustrating an envelope correction module provided by an embodiment of the present application;

Fig. 9 is an internal structure diagram illustrating a radio frequency DPD module provided by an embodiment of the present application;

Fig. 10 is an internal structure diagram illustrating a delay control module provided by an embodiment of the present application;

Fig. 11 is an internal structure diagram illustrating a fractional delay filter provided by an embodiment of the present application;

Fig. 12 is a schematic structural diagram illustrating applying an ET-PA system provided by an embodiment of the present invention to a GSM scenario;

Fig. 13 is a schematic structural diagram illustrating applying an ET-PA system provided by an embodiment of the present invention to a low-frequency scenario;

Fig. 14 is a schematic structural diagram illustrating applying an ET-PA system provided by an embodiment of the present invention to a 5G millimeter wave scenario;

Fig. 15 is a schematic structural diagram illustrating an apparatus provided by an embodiment of the present application.

## DETAILED DESCRIPTION

In order to make the objectives, technical solutions and advantages of the present application clearer, the embodiments of the present application will be described in detail below in conjunction with the accompanying drawings. It should be noted that the embodiments in the application and the features in the embodiments can be arbitrarily combined with each other as long as there is no conflict.

The steps shown in the flow charts of the accompanying drawings can be performed in, for example, a computer system with a set of computer-executable instructions. And although logic sequences are shown in the flow charts, in some cases, the steps shown or described can be performed in sequences different from those herein.

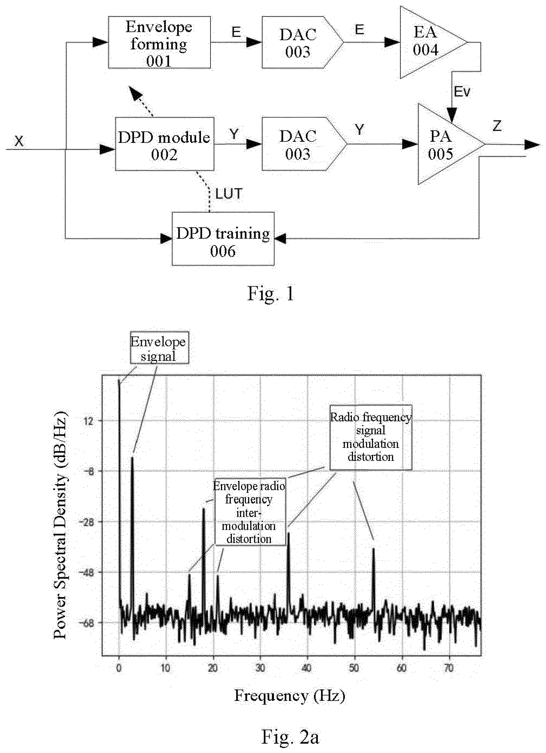

Fig. 1 is a structural diagram illustrating an envelope tracking power amplifier system in the existing art. Data in the system, depending on different processing stages, includes: a radio frequency input signal X, an envelope signal E, a digital pre-distortion (DPD)-processed radio frequency input signal Y, a voltage signal Ev that has been modulated by a power demodulator EA, and a radio frequency output signal Z that has been amplified by a PA.

In the envelope tracking power amplifier system, an envelope forming module 001 is configured to obtain the envelope signal E by performing envelope extraction and envelope formation on the radio frequency input signal X; a DPD module 002 is configured to obtain, by performing DPD processing on the radio frequency input signal X in a radio frequency link, the DPD-processed radio frequency input signal Y; a DAC module 003 is configured to perform digital-to-analog conversion on the DPD-processed radio frequency input signal Y and the envelope signal E; an EA modulation module 004 is configured to output the modulated voltage signal Ev according to the input envelope signal E; a PA module 005 is configured to obtain the radio frequency output signal Z by amplifying the DPD-processed radio frequency input signal Y; and a DPD training module 006 is configured to collect and pre-process the radio frequency output signal Z output from the PA, and perform a DPD parameter training and LUT data generation according to equivalent baseband information fed back by the radio frequency output signal Z and the radio frequency input signal X.

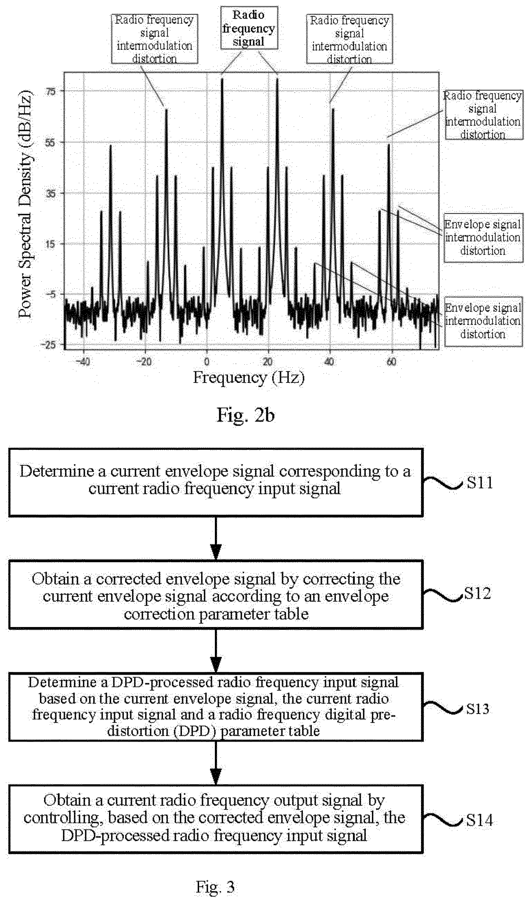

Figs. 2a and 2b are schematic diagrams illustrating two links of signal outputs caused by mutual coupling between the radio frequency input signal and the envelope signal of the existing ET-PA system. Taking a single tone signal as an example, the frequency points of the envelope signal are 0 MHz and 3 MHz, and the frequency points of the radio frequency input signal are 5 MHz and 23 MHz. As shown in Fig. 2a, when no envelope correction is made, the EA output signal has a high-order modulation distortion from the differential frequency of 18 MHz of the radio frequency input signal and an intermodulation distortion with the envelope signal, which seriously affects the accuracy of the EA output voltage Ev. Further, as shown in Fig. 2b, after passing through the PA, the DPD-processed radio frequency input signal Y has an envelope signal-related intermodulation distortion (such as -34 MHz, -28 MHz, -16 MHz, -19 MHz, etc.) in addition to the intermodulation distortion at the original frequency points (such as -31 MHz, -13 MHz, 41 MHz, 59 MHz).

As described above, the working state of the envelope link may be affected by the radio frequency link, thus a distortion may occur, and such distortion may accordingly cause a distortion of the radio frequency output signal Z output from the PA in the radio frequency link, which is a problem hard to be solved by a traditional envelope tracking power amplifier (ET-PA) architecture.

Fig. 3 is a flow chart of a pre-distortion processing method provided by an embodiment of the present application. The method can be applied to the case of processing the pre-distortion of the ET-PA. The method can be performed by a pre-distortion processing device provided by the application, and the pre-distortion processing device can be implemented by software and/or hardware.

As shown in Fig. 3, the pre-distortion processing method provided by an embodiment of the application mainly includes steps S11, S12, S13 and S14.

In S11, a current envelope signal corresponding to a current radio frequency input signal is determined.

In S12, a corrected envelope signal is obtained by correcting the current envelope signal according to an envelope correction parameter table.

In S13, based on the current envelope signal, the current radio frequency input signal and a radio frequency digital pre-distortion (DPD) parameter table, a DPD-processed radio frequency input signal is determined.

In S14, a current radio frequency output signal is obtained by controlling, based on the corrected envelope signal, the DPD-processed radio frequency input signal.

In this embodiment, the current radio frequency input signal refers to a radio frequency signal input into the ET-PA system at the current moment.

In an exemplary implementation, the current radio frequency output signal is obtained by controlling, based on the corrected envelope signal, the DPD-processed radio frequency input signal, through the following: obtaining a delayed envelope signal by performing integral point delay and fractional delay on the corrected envelope signal; obtaining a delayed radio frequency input signal by performing the integral point delay and the fractional delay on the DPD-processed radio frequency input signal; converting the delayed envelope signal into an analog envelope signal, and converting the delayed radio frequency input signal into an analog radio frequency input signal; and obtaining the current radio frequency output signal that meets the power requirement by controlling the analog radio frequency input signal for power modulation according to the analog envelope signal.

In an exemplary implementation, after the current radio frequency output signal is obtained by controlling, based on the corrected envelope signal, the DPD-processed radio frequency input signal, the method also includes: substituting the current radio frequency input signal, the corrected radio frequency input signal, the current radio frequency output signal and a plurality of historical radio frequency input signals into a preset envelope model expression to determine an envelope correction parameter corresponding to the current envelope signal; and updating, based on the current envelope signal and the envelope correction parameter corresponding to the current envelope signal, the envelope correction parameter table.

In an exemplary implementation, the preset envelope model expression is:

$$\left|X'(n)\right| + \left|X(n)\right| - \left|Z(n)\right| = \sum_{k=0}^{K} \sum_{m=0}^{L-1} A_{km} \left|X(n\text{-}m)\right|^{k}$$

Where $A_{km}$ is an envelope correction parameter corresponding to an envelope signal at the n-th moment, X'(n) is a corrected radio frequency input signal corresponding to a radio frequency input signal at the n-th moment, X(n) is the radio frequency input signal at the n-th moment, Z(n) is a radio frequency output signal at the n-th moment, X(n-m) is a radio frequency input signal at the (n-m)-th moment, L is the count of the historical radio frequency input signals, K is any positive integer, m is an integer greater than or equal to 0, n is a positive integer greater than m.

In this embodiment, the envelope correction parameter $A_{km}$ corresponding to the current radio frequency input signal is calculated by substituting a value of the current radio frequency input signal into $|X(n)|$ in the preset envelope model expression, substituting a value of the corrected radio frequency input signal into $|X'(n)|$ in the preset envelope model expression, substituting a value of the current radio frequency output signal into $|Z(n)|$ in the preset envelope model expression, and substituting the plurality of historical radio frequency input signals into $\sum_{k=0}^{K} \sum_{m=0}^{L-1} \left|X(n\text{-}m)\right|^{k}$ in the preset envelope model expression.

The value of K can be set according to the actual operation situation of the system, and in this embodiment, K can be any positive integer from 1 to 10.

It should be noted that each of the current radio frequency input signal, the corrected radio frequency input signal, the current radio frequency output signal, the plurality of historical radio frequency input signals and $|X(n)|$, $|X'(n)|$, $|Z(n)|$ and $|X(n-m)|^k$ in the preset envelope model expression is a sequence matrix, and in this application, for the convenience of description, it is described in the form of numerical value.

In an exemplary implementation, after the current radio frequency output signal is obtained by controlling, based on the corrected envelope signal, the DPD-processed radio frequency input signal, the method also includes: determining a radio frequency DPD parameter corresponding to both the current radio frequency input signal and the current envelope signal by substituting equivalent baseband signals fed back by a plurality of historical output radio frequency signals, the plurality of historical radio frequency input signals, a plurality of historical envelope signals and the current radio frequency input signal into a preset DPD model expression; and updating a radio frequency DPD parameter table based on the current radio frequency input signal, the current envelope signal as well as the radio frequency DPD parameter corresponding to both the current envelope signal and the current radio frequency input signal.

In an exemplary implementation, the DPD model expression is:

$$X(n)=\sum_{k_1}^{K}\sum_{k_2}^{K}\sum_{m_1}^{L\text{-}1}\sum_{m_2}^{L\text{-}1}\sum_{m_3}^{L\text{-}1}C_{km}\left|X\left(n\text{-}m_1\right)\right|^{k_1}Z'\left(n\text{-}m_2\right)E\left(n\text{-}m_3\right)^{k_2};$$

where $C_{km}$ is a radio frequency DPD parameter corresponding to both the current envelope signal and the radio frequency input signal at the n-th moment, $X(n)$ is the radio frequency input signal at the n-th moment, $X(n-mi)$ is a radio frequency input signal at the $(n-m_1)$-th moment, $Z'(n-m_2)$ is an equivalent baseband signal fed back by a historical output radio frequency signal at the $(n-m_2)$-th moment, $E(n-m_3)$ is an envelope signal at the $(n-m_3)$-th moment, L is the count of the historical radio frequency input signals, K is any positive integer, each of $m_1$, $m_2$ and $m_3$ is an integer less than n. $m_1$, $m_2$ and $m_3$ may be equal or unequal, which is not limited in this embodiment.

In this embodiment, the radio frequency DPD parameter $C_{km}$ corresponding to both the current radio frequency input signal and the current envelope signal is calculated by substituting values of equivalent baseband signals fed back by the plurality of historical output radio frequency signals into $Z'(n-m_2)$ in the preset DPD model expression, substituting a value of the current radio frequency output signal into $|X(n)|$ in the preset DPD model expression, substituting the plurality of historical radio frequency input signals into $X(n-mi)$ in the preset DPD model expression, and substituting the plurality of historical envelope signals into $E(n-m_3)^{k2}$ in the preset DPD model expression.

The value of K can be set according to the actual operation situation of the system, and in this embodiment, K can be any positive integer from 1 to 10.

It should be noted that each of the equivalent baseband signals fed back by the plurality of historical output radio frequency signals, the plurality of historical radio frequency input signals, the plurality of historical envelope signals, the current radio frequency input signal and $|X(n)|$, $X(n-mi)$, $Z'(n-m_2)$ and $E(n-m_3)^{k2}$ in the preset DPD model expression is a sequence matrix, and in this application, for the convenience of description, it is described in the form of numerical value.

In an exemplary implementation, the corrected envelope signal is obtained in the following manners by correcting the current envelope signal according to the envelope correction parameter table: performing a query in the envelope correction parameter table based on the current envelope signal, and determining a current correction parameter corresponding to the current envelope signal; and correcting the current envelope signal by using the current correction parameter, and obtaining the corrected envelope signal.

In an exemplary implementation, based on the current envelope signal, the current radio frequency input signal and the radio frequency digital pre-distortion (DPD) parameter table, the DPD-processed radio frequency input signal is determined by: obtaining a module value of the current radio frequency input signal by performing a modulo operation on the current radio frequency input signal; obtaining a current DPD parameter by performing, based on the current envelope signal and the module value of the current radio frequency input signal, a query in the radio frequency DPD parameter table; and obtaining the DPD-processed radio frequency input signal by processing the current radio frequency input signal according to the current DPD parameter.

It should be noted that, in the above embodiment, the envelope signal is directly used to control the DPD-processed radio frequency input signal, so as to obtain the current output signal. In the embodiment of this application, another implementation is provided, in which a voltage control signal converted from the envelope signal is used to control the DPD-processed radio frequency input signal, so as to obtain the current output signal.

The step in which the voltage control signal converted from the envelope signal is used to control the DPD-processed radio frequency input signal includes: determining the current envelope signal corresponding to the current radio frequency input signal; determining a voltage control signal synchronized with the current radio frequency input signal by means of look-up table indexing, and using a voltage correction parameter table to correct the synchronized voltage control signal so as to obtain a corrected voltage control signal; determining, based on the synchronized voltage control signal, the current radio frequency input signal and the radio frequency digital pre-distortion (DPD) parameter table, the DPD-processed radio frequency input signal; and

obtaining a current radio frequency output signal by controlling the DPD-processed radio frequency input signal based on the corrected envelope signal.

It should be noted that steps for determining the voltage correction parameter table and the radio frequency DPD parameter table are similar to the steps of the envelope correction parameter table and the radio frequency DPD parameter table in the above embodiments. For details, please refer to the descriptions in the above embodiments, which will not be described in detail in this embodiment.

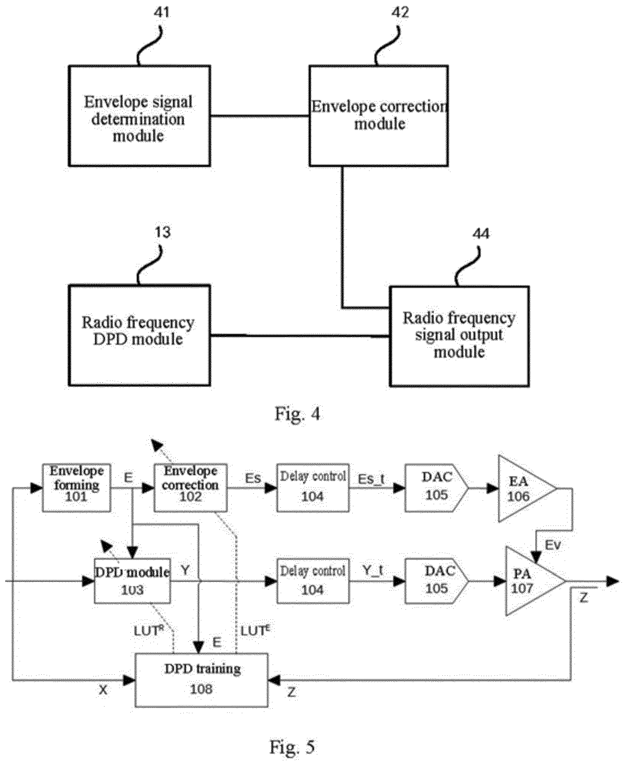

Fig. 4 is a schematic structural diagram illustrating a pre-distortion processing device provided by an embodiment of the present application. The method can be applied to the case of processing the pre-distortion of the ET-PA. The pre-distortion processing device can be implemented by software and/or hardware.

As shown in Fig. 4, the pre-distortion processing device provided by an embodiment of the present application mainly includes an envelope signal determination module 41, an envelope correction module 42, a radio frequency DPD module 43 and a radio frequency signal output module 44.

The envelope signal determination module 41 is configured to determine a current envelope signal corresponding to a current radio frequency input signal.

The envelope signal correction module 42 is configured to obtain a corrected envelope signal by correcting the current envelope signal based on an envelope correction parameter table.

The radio frequency DPD module 43 is configured to determine, based on the current envelope signal, the current radio frequency input signal and a radio frequency digital pre-distortion (DPD) parameter table, a DPD-processed radio frequency input signal.

The radio frequency signal output module 44 is configured to obtain a current radio frequency output signal by controlling, based on the corrected envelope signal, the DPD-processed radio frequency input signal.

In an exemplary implementation, the radio frequency signal output module 44 is configured to: obtain a delayed envelope signal by performing integral point delay and fractional delay on the corrected envelope signal; obtain a delayed radio frequency input signal by performing integral point delay and fractional delay on the DPD-processed radio frequency input signal; convert the delayed envelope signal into an analog envelope signal, and convert the delayed radio frequency input signal into an analog radio frequency input signal; and obtain, by controlling the analog radio frequency input signal for power modulation based on the analog envelope signal, the current radio frequency output signal that meets the power requirement.

In an exemplary implementation, the device also includes: an envelope correction parameter table update module, configured to: determine an envelope correction parameter corresponding to the current envelope signal by substituting the current radio frequency input signal, the corrected radio frequency input signal, the current radio frequency output signal and a plurality of historical radio frequency input signals into a preset envelope model expression; and update the envelope correction parameter table based on the current envelope signal and the envelope correction parameter corresponding to the current envelope signal.

In an exemplary implementation, the preset envelope model expression is:

$$\left|X'(n)\right|+\left|X(n)\right|-\left|Z(n)\right|=\sum_{k=0}^{K}\sum_{m=0}^{L-1}A_{km}\left|X(n\text{-}m)\right|^{k};$$

where $A_{km}$ is an envelope correction parameter corresponding to an envelope signal at the n-th moment, X'(n) is a corrected radio frequency input signal corresponding to a radio frequency input signal at the n-th moment, X(n) is the radio frequency input signal at the n-th moment, Z(n) is a radio frequency output signal at the n-th moment, X(n-m) is a radio frequency input signal at the (n-m)-th moment, L is the count of the historical radio frequency input signals, K is any positive integer, n is a positive integer greater than m.

In an exemplary implementation, the device also includes a radio frequency DPD parameter table update module, configured to: determine a radio frequency DPD parameter corresponding to both the current radio frequency input signal and the current envelope signal by substituting equivalent baseband signals fed back by a plurality of historical output radio frequency signals, the plurality of historical radio frequency input signals, a plurality of historical envelope signals and the current radio frequency input signal into a preset DPD model expression; and update a radio frequency DPD parameter table based on the current radio frequency input signal, the current envelope signal as well as the radio frequency DPD parameter corresponding to both the current radio frequency input signal and the current envelope signal.

In an exemplary implementation, the preset DPD model expression is:

$$X(n) = \sum_{k_1} \sum_{k_2} \sum_{m_1}^{L-1} \sum_{m_2}^{L-1} \sum_{m_3}^{L-1} C_{km} |X(n-m_1)|^{k_1} Z'(n-m_2) E(n-m_3)^{k_2};$$

where $C_{km}$ is a radio frequency DPD parameter corresponding to both the current envelope signal and the radio frequency input signal at the n-th moment, X(n) is a radio frequency input signal at the n-th moment, X(n-mi) is a radio frequency input signal at the $(n-m_1)$-th moment, Z'$(n-m_2)$ is an equivalent baseband signal fed back by a historical output radio frequency signal at the $(n-m_2)$-th moment, $E(n-m_3)$ is an envelope signal at the $(n-m_3)$-th moment, L is the count of the historical radio frequency input signals, K is any positive integer, each of $m_1$, $m_2$ and $m_3$ is an integer less than n.

In an exemplary implementation, the envelope signal correction module 42 is configured to: determine a current correction parameter corresponding to the current envelope signal by performing query in the envelope correction parameter table based on the current envelope signal; and obtain the corrected envelope signal by correcting the current envelope signal based on the current correction parameter.

In an exemplary implementation, the radio frequency DPD module 43 is configured to: obtain a module value of the current radio frequency input signal by performing a modulo operation on the current radio frequency input signal; obtain a current DPD parameter by performing, based on the current envelope signal and the module value of the current radio frequency input signal, a query in the radio frequency DPD parameter table; and obtain the DPD-processed radio frequency input signal by processing the current radio frequency input signal based on the current DPD parameter.

In an applicative example, the present application provides an ET-PA system with both high efficiency and high linearity. Fig. 5 is a schematic structural diagram illustrating an ET-PA system with both high efficiency and high linearity provided by an embodiment of the present application. As shown in Fig. 5, the ET-PA system with both high efficiency and high linearity includes: an envelope extraction module, an envelope forming module 101, an envelope correction module 102, an envelope link delay control module 104, an EA modulation module 106, a radio frequency DPD module 103, a radio frequency link delay control module 104, a digital analog convertor (DAC) module 105, a PA module 107, a DPD parameter training module 108, etc.

The envelope extraction module is configured to: detect, track and extract envelope information of a current radio frequency input signal X, and convert the envelope information into a corresponding current envelope signal E to output the current envelope signal E to the envelope forming module 101.

The envelope forming module 101 is configured to receive the current envelope signal E output from the above envelope extraction module.

The envelope correction module 102 is configured to obtain a corrected envelope signal Es by correcting the current envelope signal E, so as to reduce the influence of signals in the radio frequency link on the voltage Ev output from the EA modulation module106 in the envelope link and ensure that the error of the voltage Ev output from the EA modulation module106 is within an allowable range.

The envelope link delay control module 104 is configured to obtain an envelope signal Es-t that has undergone a delay control by postponing or advancing the corrected envelope signal Es, where a rough delay correction can ensure that a synchronization delay difference between the DPD-processed radio frequency input signal Y and the corrected envelope signal Es is controlled to be within a unit sampling point; a fractional interpolation (Farrow) filtration module is configured to precisely adjust the delay amount of the voltage control signal, so that synchronization delay differences between the DPD-processed radio frequency input signal Y and the corrected envelope signal Es as well as the current envelope signal can be reduced to be within a fractional sampling point.

The digital analog convertor (DAC) module 105 is configured to convert the current envelope signal Es-t that has undergone the delay control into an analog domain from a digital domain, and transmit Es-t to the EA modulation module 106.

The EA modulation module 106 is configured to obtain the output voltage Ev by receiving and processing the above envelope signal Es-t that has undergone the delay control, and set the above output voltage Ev as a drain supply voltage of the PA.

The radio frequency DPD module 103 is configured to obtain a DPD-processed radio frequency input signal Y by performing the DPD processing on the current radio frequency input signal X, so as to reduce the influence of other devices in the radio frequency link on the radio frequency input signal and ensure the linearity degree of the output signal of the PA.

The radio frequency link delay control module 104 is configured to obtain the radio frequency input signal Y-t that has undergone a delay control by postponing or advancing the current DPD-processed radio frequency input signal Y, where a rough delay correction can ensure that a synchronization delay difference between the DPD-processed radio frequency input signal Y and the corrected envelope signal Es is controlled to be within a unit sampling point; a Farrow filtration module is configured to precisely adjust the delay amount of the radio frequency input signal, so that synchronization delay difference between the DPD-processed radio frequency input signal Y and the corrected envelope signal Es can be reduced to be within a fractional sampling point.

The digital analog convertor (DAC) module 105 is also configured to convert the radio frequency input signal Y-t that has undergone the delay control in the radio frequency link into an analog domain from a digital domain, and transmit Y-t to the PA module 107.

The PA module 107 is configured to amplify an analog delay-controlled radio frequency input signal Y-t signal from the DAC in the radio frequency link, and output the current radio frequency input signal that meets the power requirement. The drain or source power supply of the PA is achieved by the output voltage Ev of the aforementioned EA modulation module.

The DPD parameter training module 108 is configured to: collect and process the radio frequency output signal Z output from the PA module 107, and an equivalent baseband signal Z' obtained from the radio frequency output signal Z via an analog-digital convertor; complete extraction of the envelope correction parameter and extraction of the radio frequency DPD parameter; and map the extracted parameters into a look-up table and then transfer the look-up table to the envelope correction module and the radio frequency DPD module.

The functions of the DPD parameter training module 108 include: delay alignment, energy alignment, phase alignment and other data pre-processing operations between the equivalent baseband signal fed back by the radio frequency output signal and the current radio frequency input signal as well as the current envelope signal; extraction of the envelope signal correction module parameter by means of the current radio frequency input signal, the corrected radio frequency input signal, the current radio frequency output signal and the plurality of historical radio frequency input signals; and extraction of the radio frequency DPD parameter by means of the equivalent baseband signals fed back by the plurality of historical output radio frequency signals, the plurality of historical radio frequency input signals, the plurality of historical envelope signals and the current radio frequency input signal.

The extraction of the envelope correction parameter in the DPD parameter training module can be implemented in, but not limited to, the following ways: performing polynomial modeling by taking $|X(n)|-|Z(n)|$ as an objective function and taking $|X(n-m)|$ as an independent variable, where $X(n)$ is a radio frequency input signal at the n-th moment, $Z(n)$ is a radio frequency output signal at the n-th moment, $X(n-m)$ is a radio frequency input signal at the (n-m)-th moment. When the value of $|X(n)|-|Z(n)|$ is less than a threshold, coefficient updating is stopped, the preset envelope model expression can be expressed as:

$$\left|X'(n)\right|\times\left|X(n)\right|-\left|Z(n)\right| = \sum_{k=0}^{K}\sum_{m=0}^{L-1}A_{km}\left|X(n-m)\right|^{k}$$

where $A_{km}$ is an envelope correction parameter corresponding to an envelope signal at the n-th moment, i.e., an envelope correction parameter to be solved, $X'(n)$ is a corrected radio frequency input signal corresponding to a radio frequency input signal at the n-th moment, $X(n)$ is the radio frequency input signal at the n-th moment, $Z(n)$ is a radio frequency output signal at the n-th moment, $X(n-m)$ is a radio frequency input signal at the (n-m)-th moment, L is the count of the historical radio frequency input signals, K is any positive integer, n is a positive integer greater than m.

Its calculation can be implemented by means of the LS algorithm or the LMS algorithm, and the LUT data (LUTE[m]) is generated by means of a look-up table and transferred to the envelope correction module.

The extraction of the radio frequency DPD parameter in the DPD parameter training module can be implemented in, but not limited to, the following ways: the equivalent baseband signal Z' of the current radio frequency output signal Z can be obtained by fitting the historical radio frequency input signal, the historical envelope signal that has undergone envelope forming, the current radio frequency input signal and the current envelope signal, taking a polynomial as an example, the equivalent baseband signal Z' can be expressed as:

$$Z'(n) = \sum\ldots\sum B_{km}\left|X(n-m_1)\right|^{k_1}X(n-m_2)E(n-m_3)^{k_2}$$

Similarly, the polynomial model expression of coefficients of the preset DPD model can be obtained.

$$X(n) = \sum_{k_1}^{K}\sum_{k_2}^{K}\sum_{m_1}^{L-1}\sum_{m_2}^{L-1}\sum_{m_3}^{L-1}C_{km}\left|X(n-m_1)\right|^{k_1}Z'(n-m_2)E(n-m_3)^{k_2}$$

where $C_{km}$ is a radio frequency DPD parameter corresponding to both the current envelope signal and the radio frequency input signal at the n-th moment, i.e., a radio frequency DPD parameter to be solved, $X(n)$ is a radio frequency input signal at the n-th moment, $X(n-m_1)$ is a radio frequency input signal at the (n-m_1)-th moment, $Z'(n-m_2)$ is an equivalent

baseband signal fed back by a historical output radio frequency signal at the $(n-m_2)$-th moment, $E(n-m_3)$ is an envelope signal at the $(n-m_3)$-th moment, L is the count of the historical radio frequency input signals, K is any positive integer, each of $m_1$, $m_2$ and $m_3$ is an integer less than n.

Its calculation can be implemented by means of the LS algorithm or the LMS algorithm. Since the forward signal module value |X| and the order of the signal E that has undergone envelope forming can be matched, the application is implemented as hardware by adopting the 2D-LUT method with X and E as index sizes.

2D-LUT data (LUTR [m,n]) (where m and n take 0, 1, ..., L-1) obtained by the above method is transferred to the DPD module to update internal LUT data of the DPD module.

The present application provides an ET-PA system with both high efficiency and high linearity. Envelope tracking can be continuously and tightly completed by introducing the envelope correction module into the envelope link, and the influence of the signal in the radio frequency link on the signal in the envelope link is reduced by adjusting the implementation strategies of the envelope forming module and the envelope correction module, so that the PA can maintain high efficiency in various working modes; the envelope output signal formed in the envelope link is used as one of the input signals of the DPD module in the radio frequency link, so as to improve the completeness of the radio frequency DPD model, enhance the linearization capability of the radio frequency DPD model, and effectively improve the linearity degree of the output signal of the PA; in addition to implementing rough delay at the integer point level of the two links of signals, a dynamically adjustable fractional delay configuration is implemented by means of the fractional delay filter, thereby effectively improving the delay alignment accuracy of the envelope signal and the radio frequency input signal.

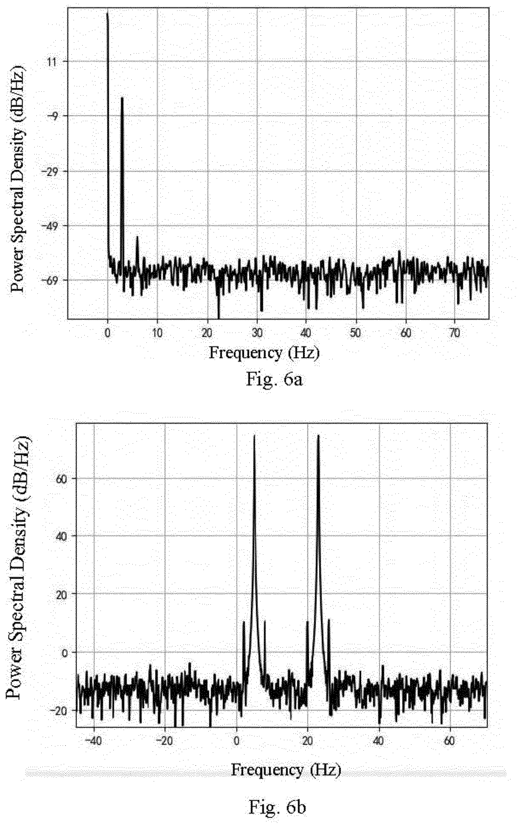

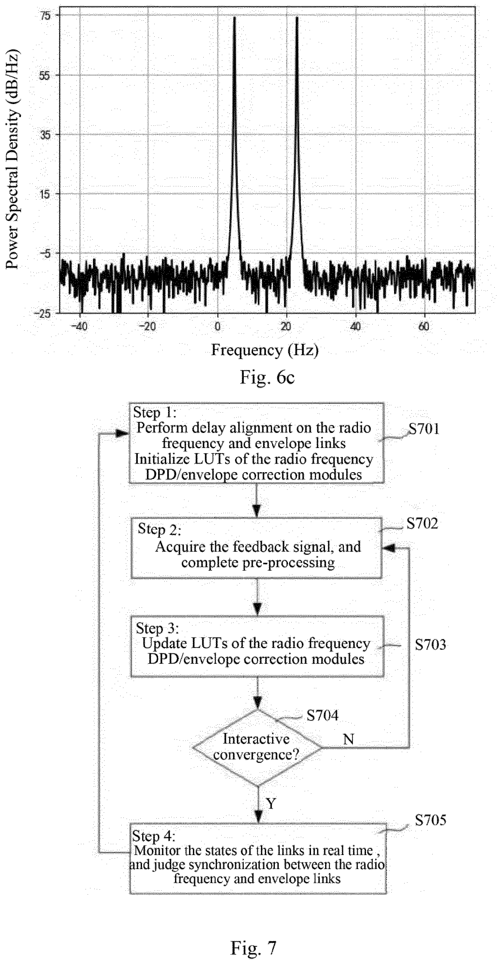

Figs. 6a, 6b and 6c are schematic diagrams illustrating two links of output signals with the coupling effect of the radio frequency input signal and the envelope signal being removed provided by an embodiment of the present application. Taking a single tone signal as an example, the corrected output signal from the EA is shown in Fig. 6a, in the output signal of the EA, interference from the radio frequency input signal is effectively removed; in the case that the envelope signal is considered while DPD modeling, the output signal from the PA is shown in Fig. 6b; in the case that the envelope signal is not considered while DPD modeling, the output signal from the PA is shown in Fig. 6c. And as can be seen from Figs 6b and 6c, if the modulation effect of the envelope signal E is considered in DPD modeling, the radio frequency output index of the system can be effectively improved.

Fig. 7 is a diagram illustrating a work flow of an ET-PA system with both high efficiency and high linearity provided by an embodiment of the present application. The work flow mainly includes steps S701, S702, S703, S704 and S705.

In S701, a delay alignment is performed on the radio frequency link and the envelope link to ensure the synchronization of the radio frequency link and the envelope link.

In S702, the radio frequency DPD module and the envelope correction module are initialized, and preset or stable coefficients iteratively obtained are wrote in the radio frequency DPD module and the envelope correction module, the LUT data of the envelope forming module 101 is initialized as a preset mapping table of a certain forming function. The delay control modules 104(1) and 104(2) are adjusted, so that the voltage Ev output by the EA modulation module and the DPD-processed radio frequency input signal Y_t reach the PA at the same time, and then the PA module 107 outputs the amplified radio frequency output signal Z.

In S703, the DPD training module 108 is configured to: collect the radio frequency output signal Z and perform data pre-processing on the radio frequency output signal Z to obtain a feedback signal Z' which is synchronized with the radio frequency input signal X; extract the envelope correction module parameter by means of the envelope signal of the feedback signal Z' and the radio frequency input signal X; extract the radio frequency DPD parameter by means of the radio frequency input signal X, the feedback signal Z' and the envelope signal E that has undergone the envelope forming; and transfer these parameters to the envelope correction module 102 and the radio frequency DPD module 103 respectively to update the coefficients of the corresponding modules. For the extraction methods of the envelope correction parameter and the DPD parameter, reference may be made to the descriptions in the above embodiments, which will not be described in detail in this embodiment.

In S704, it is necessary for the radio frequency DPD module 103 to perform 2D-LUT (i.e., LUTR [m,n]) retrieval with the current radio frequency input signal and the current envelope signal that has undergone the envelope forming being used as the input signal, the retrieval results are computed with other input items in the model, then the DPD-processed radio frequency input signal is generated; it is necessary for the envelope correction module 102 to obtain the corrected envelope signal Es via calculation after performing LUT (i.e., LUTE [m]) retrieval on the signal E that has undergone the envelope forming.

In S705, S703 and S704 are repeated to continuously iteratively update the LUTs of the envelope correction module and the radio frequency DPD module until the DPD performance is stable, and the system state is monitored in real time. If the synchronization between the radio frequency link and the envelope link is abnormal during operation of the system, it is necessary to return to S701 again.

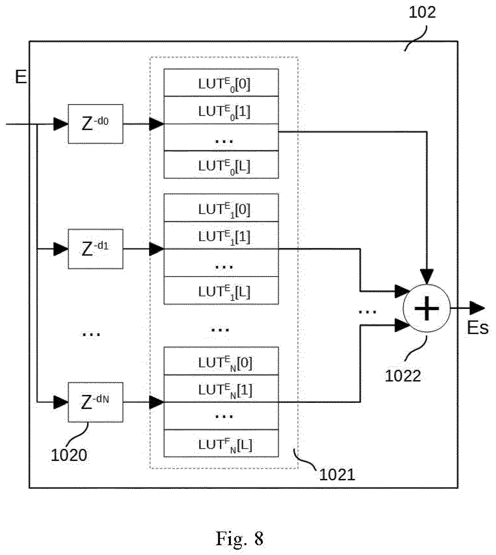

Fig. 8 is an internal structure diagram illustrating an envelope correction module provided by an embodiment of the present application. A signal delay module 1020 is configured to perform appropriate delay according to signal memory item configurations in the correction module, where $Z^{-dn}$ (n=0,1,...N) is the delay configuration of each table item in the LUT. For a look-up table module 1021, the LUT stores LUT data LUTE of the envelope correction model, which is acquired by the DPD training module 108 and transferred to the envelope correction module 102. The signal E from the envelope forming module 101 undergoes LUT tabular data indexing and a series of multiply-add operations, and the corrected envelope signal Es is output.

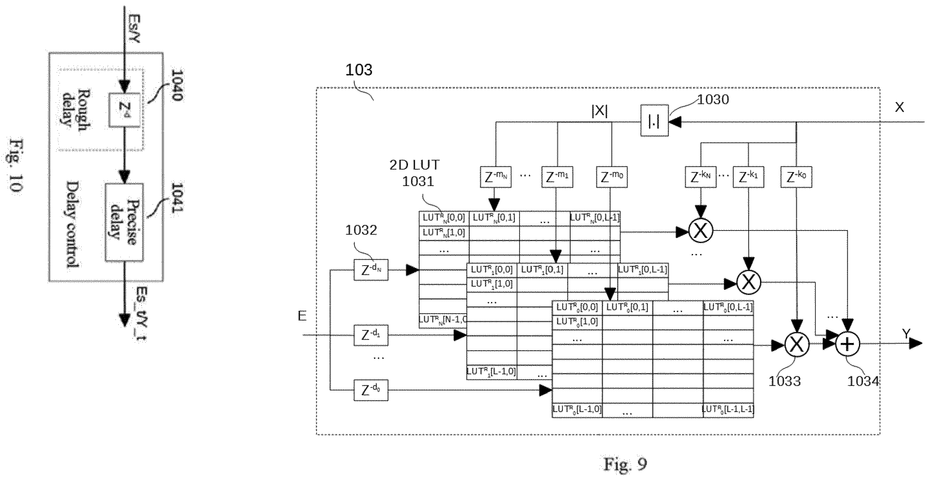

Fig. 9 is an internal structure diagram illustrating a radio frequency DPD module provided by an embodiment of the present application. After passing through a modulo module 1030 to obtain a module value, the current radio frequency input signal X together with the envelope signal E from the envelope forming module 101 passes through a signal delay module 1032 and then passes through a 2D-LUT module 1031, to obtain indexes to output the DPD-processed radio frequency input signal Y. The module 1302 represents a signal delay module, in which there are delay configuration amounts of the radio frequency input signal, the module value of the radio frequency input signal and the envelope signal, respectively. After the data obtained by indexing the tables and other parts in the model undergo a series of multiply-add operations, the final DPD-processed radio frequency input signal Y is obtained and output. Data LUTR [m,n] (where m and n take 0, 1,..., L-1) in the 2D-LUT module is extracted and transferred by the DPD training module 108.

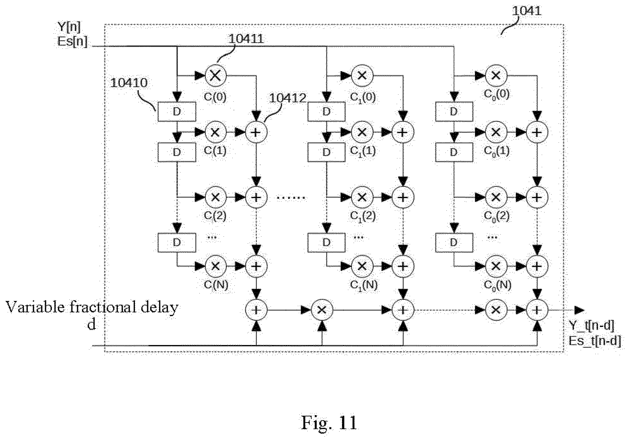

Fig. 10 is an internal structure diagram illustrating a delay control module provided by an embodiment of the present application. The delay control module includes two parts of rough delay 1040 and precise delay 1041. The rough delay is implemented by delaying for an integral clock. The precise delay is implemented by means of a fractional delay filter, the specific implementation structure thereof is shown in Fig. 11. Fig. 11 is an internal structure diagram illustrating a fractional delay filter provided by an embodiment of the present application. In Fig. 11, the input signal passes through a series of delay configurations 10410, multipliers 10411 and adders 10412, and the final output that has undergone fractional delay is obtained.

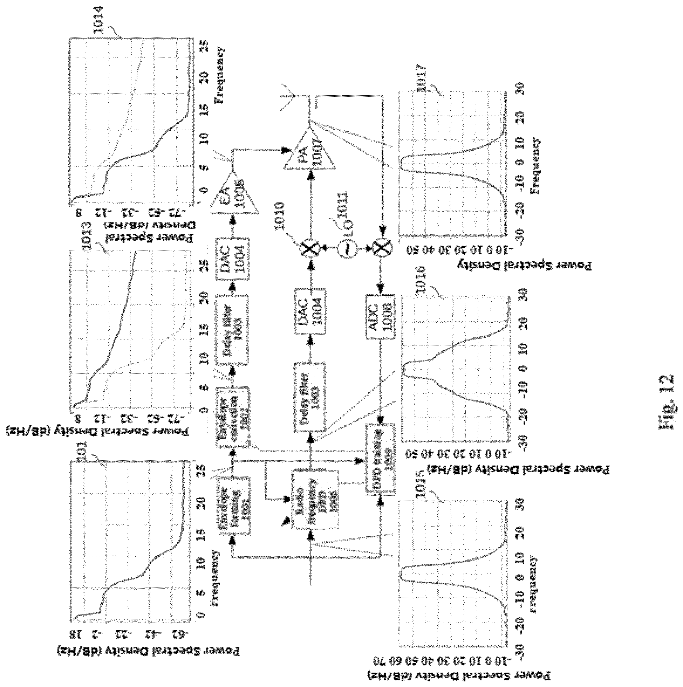

Fig. 12 is a schematic structural diagram illustrating an ET-PA system being applied to a GSM scenario provided by an embodiment of the present application, that is, the ET architecture being applied to the GSM scenario. In the figure, a four carrier 6M signal configuration is shown, one envelope modulator supplying power to one PA. In the figure, the state of the signal at each node is shown in the form of power spectrum charts. In chart 1013, the gray dotted line is the power spectrum of the envelope signal that has not undergone envelope correction, and the black solid line is the power spectrum of the envelope signal that has undergone envelope correction; in chart 1014, the gray dotted line is the power spectrum of the EA output signal that has not undergone envelope correction, and the black solid line is the power spectrum of the EA output signal that has undergone envelope correction.

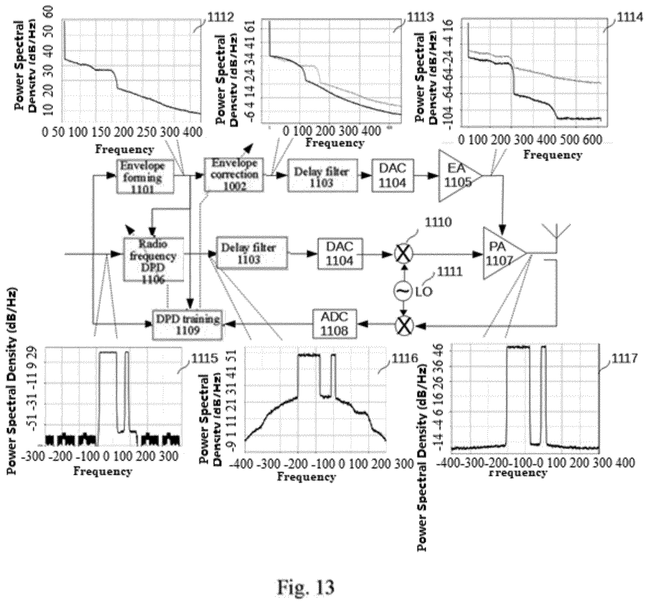

Fig. 13 is a schematic structural diagram illustrating an ET-PA system being applied to a 5G low-frequency scenario provided by an embodiment of the present application, that is, the ET-PA system architecture being applied to the 5G low-frequency scenario. The scenario provided by this embodiment adopts a 5G NR100M and LTE20M mode mixing configuration, one envelope modulator supplying power to one PA. In the figure, the state of the signal at each node is shown in the form of power spectrum charts. In chart 1113, the gray dotted line is the power spectrum of the envelope signal that has not undergone envelope correction, and the black solid line is the power spectrum of the envelope signal that has undergone envelope correction; in chart 1114, the gray dotted line is the power spectrum of the EA output signal that has not undergone envelope correction, and the black solid line is the power spectrum of the EA output signal that has undergone envelope correction.

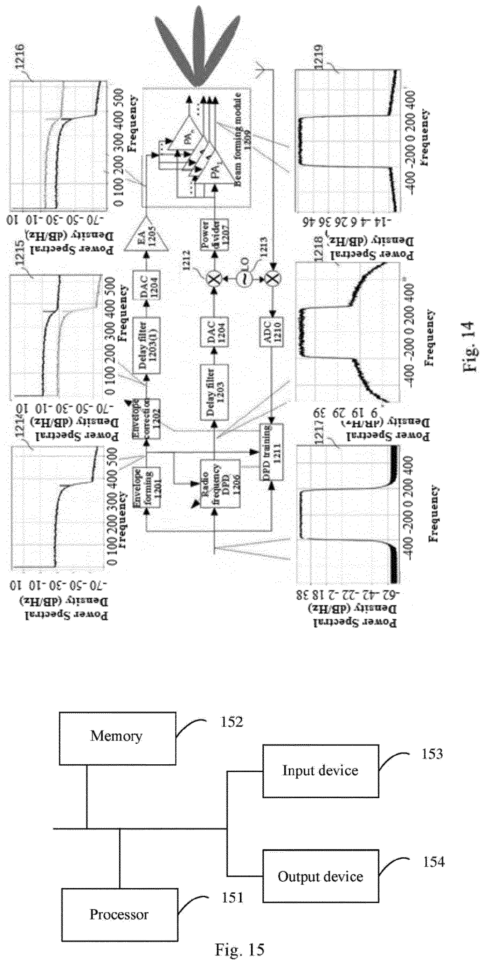

Fig. 14 is a schematic structural diagram illustrating an ET-PA system being applied to a 5G millimeter wave scenario provided by an embodiment of the present application, that is, the ET-PA system architecture being applied to the 5G millimeter wave scenario. Since 5G millimeter waves adopt the digital-analog hybrid beam forming architecture, envelope modulators supply power to PAs in a MIMO state, and at the moment, one envelope modulator corresponds to a plurality of PAs. In the figure, the signals are single carrier 400M signals that meet the 5G High frequency protocol, the state of the signal at each node being shown in the form of power spectrum charts. In chart 1215, the gray dotted line is the power spectrum of the envelope signal that has not undergone envelope correction, and the black solid line is the power spectrum of the envelope signal that has undergone envelope correction; in chart 1216, the gray dotted line is the power spectrum of the EA output signal that has not undergone envelope correction, and the black solid line is the power spectrum of the EA output signal that has undergone envelope correction.

An embodiment of the present application also provides an apparatus. Fig. 15 is a schematic structural diagram illustrating an apparatus provided by the application. As shown in Fig. 15, the apparatus provided by the application includes one or more processors 151 and a memory 152. There can be one or more processors 151 in the apparatus, and one processor 151 is taken as an example in Fig. 15. The memory 152 is used to store one or more programs. The one or more programs are executed by the one or more processors 151, so that the method according to any one of the embodiment of the application is implemented by means of the one or more processors 151.

The apparatus also includes: an input device 153 and an output device 154.

The processors 151, the memory 152, the input device 153 and the output device 154 in the apparatus can be connected through a bus or in other ways, and the connection through a bus is taken as an example in Fig. 15.

The input device 153 can be used to receive input numerical or character information, and generates key signal inputs related to user settings and function control of the apparatus. The output device 154 may include display apparatus, such as a display screen.

As a computer-readable storage medium, the memory 152 may be configured to store software programs, computer-executable programs, and modules, such as program instructions/modules corresponding to the pre-distortion processing methods described in the embodiments of the present application (e.g., an envelope signal determination module 11, an envelope correction module 12, a radio frequency DPD module 13 and an output module 14 in the pre-distortion processing device). The memory 152 may include a storage program area and a storage data area. The storage program area can store application programs required for at least one function of the operation system. The storage data area can store data or the like created according to the use of the apparatus. Furthermore, the memory 152 may include a high-speed random access memory, may also include non-volatile memories, such as at least one disk storage devices, flash devices, or other non-volatile solid-state storage devices. in some embodiments, the memory 152 may further include memories set up remotely relative to the processors 151, and these remote memories can be connected to the apparatus over a network. Examples of the above network include, but are not limited to, the Internet, an intranet, a local area network, a mobile communication network, and combinations thereof.

An embodiment of the present application also provides a storage medium. The storage medium stores a computer program, when the computer program is executed by the processors, the pre-distortion processing method according to any one of the embodiments of the application is implemented. The method includes:

determining a current envelope signal corresponding to a current radio frequency input signal;
obtaining a corrected envelope signal by correcting the current envelope signal according to an envelope correction parameter table;
determining a DPD-processed radio frequency input signal based on the current envelope signal, the current radio frequency input signal and a radio frequency digital pre-distortion (DPD) parameter table;
obtaining a current radio frequency output signal by controlling, based on the corrected envelope signal, the DPD-processed radio frequency input signal.

Of course, for a storage medium containing computer-executable instructions provided by an embodiment of the present application, the computer-executable instructions of the storage medium are not limited to the method operations described above, and may also execute related operations in the pre-distortion processing method provided by any embodiment of the present application.

From the above descriptions of the embodiments, those skilled in the art can clearly understand that the present application can be implemented by means of software and necessary general-purpose hardware, and of course can also be implemented by hardware, but in many cases, the former is a better implementation. Based on such understanding, the technical solutions of the application can be embodied in the form of software products in essence or the parts that make contributions to the existing art, and the computer software products can be stored in a computer-readable storage medium, such as a floppy disk of a computer, a read-only memory (ROM), a random access memory (RAM), a flash, a hard disk or an optical disk, etc., including several instructions to make a computer device (which can be a personal computer, a server, or a network device, etc.) to execute the methods described in the various embodiments of this application.

It is worth noting that, in the above embodiment of the pre-distortion processing device, the units and modules included are only divided according to functional logic, but are not limited to the division mentioned above, as long as the corresponding functions can be realized; in addition, the specific names of the functional units are only for the convenience of distinguishing from each other, and are not used to limit the protection scope of the present application.

The above descriptions are merely exemplary embodiments of the application, and are not intended to limit the protection scope of the application.

It should be understood by those skilled in the art that the term user terminal covers any suitable type of wireless user equipment, such as a mobile telephone, a portable data processing device, a portable web browser or a vehicle-mounted mobile station.

In general, the various embodiments of the present application may be implemented in hardware or special circuits, software, logic, or any combination thereof. For example, some aspects may be implemented in hardware, while other aspects may be implemented in firmware or software that may be executed by a controller, a microprocessor or other calculating devices, although the application is not limited thereto.

The embodiments of the present application may be implemented by the execution of computer program instructions by a data processor of a mobile device, e.g., in a processor entity, or by hardware, or by a combination of software and hardware. The computer program instructions may be assembly instructions, instruction set architecture (ISA) instructions, machine instructions, machine-dependent instructions, microcodes, firmware instructions, state setting data, or source codes written in any combination of one or more programming languages, or object codes.

The block diagrams of any logic flow in the figures of this application may represent program steps, or may represent interconnected logic circuits, modules and functions, or may represent a combination of program steps and logic circuits, modules and functions. Computer programs can be stored on the memory. The memory may be of any type suitable for the local technical environment and may be implemented using any suitable data storage technology such as, but not limited to, a read-only memory (ROM), a random access memory (RAM), an optical memory device and system (digital versatile disk (DVD) or compact disc (CD)), etc. The computer-readable medium may include a non-transitory storage medium. The data processor may be of any type suitable for the local technical environment such as, but not limited to, a general-purpose computer, a special-purpose computer, a microprocessor, a digital signal processor (DSP), an application-specific integrated circuit (ASIC), a programmable logic device (FGPA) and processors based on a multi-core processor architecture.

The foregoing has provided a detailed description of the demonstrative embodiments of the present application, by way of demonstrative and non-limiting examples. However, when considering in conjunction with the accompanying drawings and claims, various modifications and adjustments to the above embodiments will be apparent to those skilled in the art without departing from the scope of the present application. Accordingly, the proper scope of this application will be determined with reference to the claims.

**Claims**

1. A pre-distortion processing method, comprising:

   determining a current envelope signal corresponding to a current radio frequency input signal;
   obtaining a corrected envelope signal by correcting the current envelope signal based on an envelope correction parameter table;
   determining, based on the current envelope signal, the current radio frequency input signal and a radio frequency digital pre-distortion (DPD) parameter table, a DPD-processed radio frequency input signal; and
   obtaining a current radio frequency output signal by controlling the DPD-processed radio frequency input signal based on the corrected envelope signal.

2. The method according to claim 1, wherein the obtaining a current radio frequency output signal by controlling the DPD-processed radio frequency input signal based on the corrected envelope signal, comprises:

   obtaining a delayed envelope signal by performing an integral point delay and a fractional delay on the corrected envelope signal;
   obtaining a delayed radio frequency input signal by performing an integral point delay and a fractional delay on the DPD-processed radio frequency input signal;
   converting the delayed envelope signal into an analog envelope signal, and converting the delayed radio frequency input signal into an analog radio frequency input signal; and
   obtaining the current radio frequency output signal that meets a power requirement by controlling the analog radio frequency input signal for power modulation according the analog envelope signal.

3. The method according to claim 1, wherein after the obtaining a current radio frequency output signal by controlling the DPD-processed radio frequency input signal based on the corrected envelope signal, the method further comprises:

   determining an envelope correction parameter corresponding to the current envelope signal by substituting the current radio frequency input signal, the corrected radio frequency input signal, the current radio frequency output signal and a plurality of historical radio frequency input signals into a preset envelope model expression; and
   updating, based on the current envelope signal and the envelope correction parameter corresponding to the current envelope signal, the envelope correction parameter table.

4. The method according to claim 3, wherein the preset envelope model expression is:

$$\left|X'(n)\right| + \left|X(n)\right| - \left|Z(n)\right| = \sum_{k=0}^{K} \sum_{m=0}^{L-1} A_{km} \left|X(n\text{-}m)\right|^{k} \; ;$$

wherein $A_{km}$ is an envelope correction parameter corresponding to the envelope signal at an n-th moment, X'(n) is a corrected radio frequency input signal corresponding to the radio frequency input signal at the n-th moment, X(n) is the radio frequency input signal at the n-th moment, Z(n) is the radio frequency output signal at the n-th moment, X(n-m) is the radio frequency input signal at an (n-m)-th moment, L is a count of the historical radio frequency input signals, K is any positive integer, m is an integer greater than or equal to 0, n is a positive integer greater than m.

5. The method according to claim 1, wherein after the obtaining a current radio frequency output signal by controlling the DPD-processed radio frequency input signal based on the corrected envelope signal, the method further comprises:

determining a radio frequency DPD parameter corresponding to both the current radio frequency input signal and the current envelope signal by substituting equivalent baseband signals fed back by a plurality of historical output radio frequency signals, a plurality of historical radio frequency input signals, a plurality of historical envelope signals and the current radio frequency input signal into a preset DPD model expression; and
updating, based on the current radio frequency input signal, the current envelope signal and the radio frequency DPD parameter corresponding to both the current radio frequency input signal and the current envelope signal, the radio frequency DPD parameter table.

6. The method according to claim 5, wherein the preset DPD model expression is:

$$X(n) = \sum_{k_1}^{K} \sum_{k_2}^{K} \sum_{m_1}^{L-1} \sum_{m_2}^{L-1} \sum_{m_3}^{L-1} C_{km} \left| X(n-m_1) \right|^{k_1} Z'(n-m_2) E(n-m_3)^{k_2}$$

wherein $C_{km}$ is a radio frequency DPD parameter corresponding to both the current envelope signal and the radio frequency input signal at the n-th moment, X(n) is the radio frequency input signal at the n-th moment, X(n-mi) is the radio frequency input signal at an $(n-m_1)$-th moment, $Z'(n-m_2)$ is an equivalent baseband signal fed back by a historical output radio frequency signal at an $(n-m_2)$-th moment, $E(n-m_3)$ is an envelope signal at an $(n-m_3)$-th moment, L is a count of the historical radio frequency input signals, K is any positive integer, each of $m_1$, $m_2$ and $m_3$ is an integer less than n.

7. The method according to claim 1, wherein the obtaining a corrected envelope signal by correcting the current envelope signal based on an envelope correction parameter table, comprises:

determining a current correction parameter corresponding to the current envelope signal by performing, based on the current envelope signal, a query in the envelope correction parameter table; and
obtaining the corrected envelope signal by correcting the current envelope signal based on the current correction parameter.

8. The method according to claim 1, wherein the determining, based on the current envelope signal, the current radio frequency input signal and a radio frequency digital pre-distortion (DPD) parameter table, a DPD-processed radio frequency input signal, comprises:

obtaining a module value of the current radio frequency input signal by performing a modulo operation on the current radio frequency input signal;
obtaining a current DPD parameter by performing, based on the current envelope signal and the module value of the current radio frequency input signal, a query in the radio frequency DPD parameter table; and
obtaining the DPD-processed radio frequency input signal by processing the current radio frequency input signal according to the current DPD parameter.

9. A pre-distortion processing device, comprising: an envelope signal determination module, an envelope correction module, a radio frequency digital pre-distortion (DPD) module and a radio frequency signal output module,

wherein the envelope signal determination module is configured to determine a current envelope signal corresponding to a current radio frequency input signal;
the envelope signal correction module is configured to obtain a corrected envelope signal by correcting the current envelope signal according to an envelope correction parameter table;

the radio frequency DPD module is configured to determine, based on the current envelope signal, the current radio frequency input signal and a radio frequency digital pre-distortion (DPD) parameter table, a DPD-processed radio frequency input signal; and

the radio frequency signal output module is configured to obtain a current radio frequency output signal by controlling the DPD-processed radio frequency input signal based on corrected envelope signal.

10. An apparatus, comprising:

one or more processors;
a memory, configured to store one or more programs;
the one or more programs, when executed by the one or more processors, cause the one or more processors to perform the method according to any one of claims 1-8.

11. A storage medium with a computer program stored thereon, wherein computer program, when executed by a processor, causes the processor to perform the method according to any one of claims 1-8.

Fig. 1

Fig. 2a

Fig. 2b

| Determine a current envelope signal corresponding to a current radio frequency input signal | S11 |

| Obtain a corrected envelope signal by correcting the current envelope signal according to an envelope correction parameter table | S12 |

| Determine a DPD-processed radio frequency input signal based on the current envelope signal, the current radio frequency input signal and a radio frequency digital pre-distortion (DPD) parameter table | S13 |

| Obtain a current radio frequency output signal by controlling, based on the corrected envelope signal, the DPD-processed radio frequency input signal | S14 |

Fig. 3

Fig. 4

Fig. 5

Fig. 6a

Fig. 6b

Fig. 6c

Fig. 7

Fig. 8

Fig. 9

Fig. 10

Fig. 11

Fig. 12

Fig. 13

Fig. 14

Fig. 15

## INTERNATIONAL SEARCH REPORT

| International application No. |
|---|
| **PCT/CN2020/122937** |

**A. CLASSIFICATION OF SUBJECT MATTER**

H04L 25/49(2006.01)i

According to International Patent Classification (IPC) or to both national classification and IPC

**B. FIELDS SEARCHED**

Minimum documentation searched (classification system followed by classification symbols)

H04L H03F

Documentation searched other than minimum documentation to the extent that such documents are included in the fields searched

Electronic data base consulted during the international search (name of data base and, where practicable, search terms used)

CNPAT, WPI, EPODOC, CNKI: 输入, 信号, 校准, 校正, 调整, 预失真, 包络, 跟踪, input, signal, adjust, calibrate, digital pre-distortion, DPD, envelop tracking, ET

**C. DOCUMENTS CONSIDERED TO BE RELEVANT**

| Category* | Citation of document, with indication, where appropriate, of the relevant passages | Relevant to claim No. |
|---|---|---|
| X | CN 102340283 A (DATANG MOBILE COMMUNICATIONS EQUIPMENT CO., LTD.) 01 February 2012 (2012-02-01) <br> description, paragraphs 0015-0036, 0052-0085 | 1-11 |
| A | CN 106169985 A (SHANGHAI JIAO TONG UNIVERSITY et al.) 30 November 2016 (2016-11-30) <br> entire document | 1-11 |
| A | CN 103916088 A (RESEARCH INSTITUTE OF TSINGHUA UNIVERSITY IN SHENZHEN) 09 July 2014 (2014-07-09) <br> entire document | 1-11 |
| A | US 2009201084 A1 (QUALCOMM INC.) 13 August 2009 (2009-08-13) <br> entire document | 1-11 |

☐ Further documents are listed in the continuation of Box C. ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 December 2020** | **20 January 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

<table>
<tr><td colspan="2" style="text-align:center"><strong>INTERNATIONAL SEARCH REPORT</strong><br>Information on patent family members</td><td>International application No.<br><strong>PCT/CN2020/122937</strong></td></tr>
</table>

| Patent document cited in search report | | | Publication date (day/month/year) | Patent family member(s) | | | Publication date (day/month/year) |
|---|---|---|---|---|---|---|---|
| CN | 102340283 | A | 01 February 2012 | None | | | |
| CN | 106169985 | A | 30 November 2016 | None | | | |
| CN | 103916088 | A | 09 July 2014 | None | | | |
| US | 2009201084 | A1 | 13 August 2009 | JP | 2011512098 | A | 14 April 2011 |
| | | | | CN | 101965682 | A | 02 February 2011 |
| | | | | EP | 2253064 | A1 | 24 November 2010 |
| | | | | WO | 2009100381 | A1 | 13 August 2009 |
| | | | | TW | 201004129 | A | 16 January 2010 |
| | | | | JP | 2015046883 | A | 12 March 2015 |
| | | | | KR | 20100116656 | A | 01 November 2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911400195